(19) Europäisches Patentamt / European Patent Office / Office européen des brevets

(11) **EP 2 761 151 B1**

(12) **FASCICULE DE BREVET EUROPEEN**

(45) Date de publication et mention
de la délivrance du brevet:
**28.12.2016   Bulletin 2016/52**

(21) Numéro de dépôt: **12767060.2**

(22) Date de dépôt: **11.09.2012**

(51) Int Cl.:
*F02D 41/00* (2006.01)     *F02D 41/22* (2006.01)
*F02B 37/013* (2006.01)     *F02B 39/16* (2006.01)
*F02B 37/16* (2006.01)

(86) Numéro de dépôt international:
**PCT/FR2012/052023**

(87) Numéro de publication internationale:
**WO 2013/045785 (04.04.2013 Gazette 2013/14)**

(54) **PROCÉDÉ ET SYSTÈME DE DIAGNOSTIC D'UN GROUPE MOTOPROPULSEUR À DEUX TURBOCOMPRESSEURS ÉTAGÉS.**

DIAGNOSEVERFAHREN UND SYSTEM FÜR EINe Brennkraftmaschine zweistufiger Aufladung

DIAGNOSTICS METHOD AND SYSTEM FOR A POWER PLANT HAVING TWO STAGED TURBOCOMPRESSORS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.09.2011   FR 1158540**

(43) Date de publication de la demande:
**06.08.2014   Bulletin 2014/32**

(73) Titulaire: **Renault S.A.S.**
**92100 Boulogne-Billancourt (FR)**

(72) Inventeurs:
• **FONTVIEILLE, Laurent**
**F-91190 Gif-sur-Yvette (FR)**
• **MARTIN, Ludovic**
**F-91140 Villebon Sur Yvette (FR)**
• **BRUNEL, Remy**
**F-91410 Dourdan (FR)**

(56) Documents cités:
**FR-A1- 2 941 267          JP-A- 2005 220 890
US-A1- 2009 314 082     US-A1- 2011 154 892**

**Description**

L'invention a pour domaine le diagnostic de défaillance d'un moteur à combustion interne muni d'un turbocompresseur, et plus particulièrement des groupes motopropulseurs munis de deux turbocompresseurs étagés.

La suralimentation en air d'un moteur permet d'augmenter les performances du moteur en admettant, pour la combustion du carburant, une masse d'air plus grande que dans un moteur atmosphérique de cylindrée équivalente.

Un dispositif de suralimentation peut comprendre un turbocompresseur, comportant d'une part un compresseur qui alimente le moteur en air à une pression supérieure à la pression atmosphérique, et d'autre part, une turbine traversée par les gaz d'échappement du moteur.

La puissance fournie à la turbine par ces gaz d'échappement est transmise, par l'intermédiaire d'un arbre, au compresseur qui comprime l'air aspiré de l'environnement extérieur à une pression dite pression de suralimentation.

Avec la tendance actuelle à augmenter la performance spécifique des moteurs, les valeurs de pression de suralimentation demandées aux turbocompresseurs sont de plus en plus élevées. Les turbocompresseurs sont très sollicités mécaniquement, ce qui affecte leur fiabilité. Il est donc important de contrôler précisément leur état de fonctionnement et de diagnostiquer l'apparition de toute défaillance mécanique de manière, par exemple, à limiter les performances du moteur et/ou à alerter le conducteur de la nécessité d'une réparation.

D'autre part, ces défaillances mécaniques sont souvent précédées d'un défaut de régulation de la pression de suralimentation du turbocompresseur, qui peut conduire à un dépassement du niveau légal des émissions polluantes du moteur. Les normes OBD (de l'anglais : On Board Diagnosis) relatives au diagnostic embarqué à bord des véhicules imposent d'alerter le conducteur d'un tel dépassement. Il est donc important de diagnostiquer la défaillance ou le dysfonctionnement d'un turbocompresseur pour répondre à ces normes.

Actuellement, le diagnostic des fuites internes ou externes au niveau du circuit d'admission de suralimentation est basé sur la comparaison de l'intégrale de l'écart de boucle de régulation du turbocompresseur à un seuil de détection. Dans le cas d'une dérivation du compresseur défaillante, la pression mesurée est inférieure à la pression attendue, ce qui permet de détecter une défaillance. De plus, il existe une bande morte au dessus de laquelle l'intégrale n'est pas calculée, ceci pour prendre en compte la précision de la régulation de suralimentation. De même, le calcul n'est pas réalisé lorsque la consigne varie trop rapidement.

Les diagnostics actuels ne fonctionnent que lorsque la régulation de suralimentation est activée. De plus, ces performances sont très dépendantes du comportement du contrôle de la suralimentation et du contrôle de l'EGR. En effet, les calibrations impactent fortement le gabarit de réponse de la suralimentation. De plus, la stratégie étant basée sur une erreur de bouclage, une fuite interne ou externe au niveau du circuit d'admission de suralimentation ne sera pas détectée en vitesse de rotation stabilisée du fait de l'action de l'intégrateur du régulateur de suralimentation.

Il existe un besoin pour un procédé et un système de diagnostic de fuite permettant de réduire l'importance de la calibration et permettant aussi de diagnostiquer le groupe motopropulseur fonctionnant en vitesse de rotation stabilisée.

Il existe donc un besoin pour un dispositif de diagnostic de la fuite interne ou externe au niveau du circuit d'admission de suralimentation capable de détecter le risque d'augmentation des émissions polluantes, et le risque de survitesse du turbocompresseur haute pression.

En effet, une fuite interne au niveau de la dérivation du compresseur, peut amener à une réduction de la pression de suralimentation et du débit d'air, entrainant une augmentation des émissions polluantes.

Avec une fuite interne au niveau de la dérivation du compresseur, la régulation de suralimentation va naturellement compenser la fuite en faisant tourner plus vite le turbocompresseur à haute pression pouvant aller jusqu'à la destruction de celui-ci à cause d'une vitesse de rotation trop élevée.

Une fuite externe, peut amener à une réduction de la pression de suralimentation que la régulation de suralimentation va compenser en faisant tourner plus vite le turbocompresseur à haute pression pouvant aller jusqu'à la destruction de celui-ci à cause d'une vitesse de rotation trop élevée.

Selon un aspect, on propose un procédé de diagnostic d'un groupe motopropulseur muni d'au moins un turbocompresseur à basse pression et d'au moins un turbocompresseur à haute pression, les turbocompresseurs étant étagés et alimentant un moteur à combustion interne, le groupe motopropulseur équipant un véhicule automobile. Le procédé comprend les étapes suivantes :

on détermine le mode de fonctionnement du groupe motopropulseur,
on détermine la puissance de la turbine en fonction d'un premier ensemble de données et en fonction du mode de fonctionnement,
on détermine la puissance de la turbine en fonction d'un deuxième ensemble de données,
on détermine un critère de défaillance comme le rapport entre la puissance de la turbine fonction du premier ensemble de données et la puissance de la turbine fonction du deuxième ensemble de données, et
on compare le critère de défaillance à des valeurs mémorisées pour déterminer si une défaillance existe.

Le procédé de diagnostic présente l'avantage d'être facile à calibrer, de s'adapter facilement aux conditions de fonctionnement du groupe motopropulseur, et d'être utilisable tant en conditions stabilisées qu'en conditions transitoires.

Le premier ensemble de données peut être un ensemble de données déterminées du coté de la turbine à haute pression.

Le premier ensemble de données peut comprendre la vitesse de rotation de la turbine à haute pression et la température en amont de la turbine à haute pression.

Le premier ensemble de données peut comprendre la pression en amont de la turbine à haute pression et la température en amont de la turbine à haute pression.

Lorsque le groupe motopropulseur comprend une dérivation à haute pression connectée entre l'entrée et la sortie de la turbine à haute pression, le premier ensemble de données peut comprendre la position de la dérivation à haute pression, la température en amont de la turbine à haute pression et la vitesse de rotation du compresseur à haute pression.

Le deuxième ensemble de données peut être un ensemble de données déterminées du coté du compresseur à haute pression.

Le deuxième ensemble de données comprend la vitesse de rotation du compresseur à haute pression, la pression de suralimentation et la vitesse de rotation du moteur à combustion interne.

On peut déterminer le mode de fonctionnement en fonction de la position de la dérivation à haute pression et de la pression en amont de la turbine à haute pression.

Selon un autre aspect, on propose un système de diagnostic d'un groupe motopropulseur muni d'au moins un turbocompresseur à basse pression et d'au moins un turbocompresseur à haute pression, les turbocompresseurs étant étagés et alimentant un moteur à combustion interne, le groupe motopropulseur équipant un véhicule automobile. Le système de diagnostic comprend un moyen de détermination du mode de fonctionnement du groupe motopropulseur relié en sortie à un premier moyen d'estimation de la puissance de la turbine à haute pression, le système de diagnostic comprenant par ailleurs un deuxième moyen d'estimation de la puissance de la turbine à haute pression et un moyen d'estimation d'un critère de défaillance connecté en entrée au premier moyen d'estimation de la puissance de la turbine à haute pression et au deuxième moyen d'estimation de la puissance de la turbine à haute pression et en sortie à un moyen de comparaison apte à comparer le critère de défaillance à des valeurs mémorisées.

Le premier moyen d'estimation de la puissance de la turbine à haute pression peut comprendre au moins un moyen de modélisation du turbocompresseur à haute pression, le premier moyen d'estimation étant apte à utiliser le moyen de modélisation du turbocompresseur à haute pression correspondant au signal reçu du moyen de détermination du mode de fonctionnement du groupe motopropulseur.

D'autres buts, caractéristiques et avantages apparaîtront à la lecture de la description suivante donnée uniquement en tant qu'exemple non limitatif et faite en référence aux dessins annexés sur lesquels :

- la figure 1 illustre un groupe motopropulseur à deux turbocompresseurs étagés ;
- la figure 2 illustre un diagramme vitesse de rotation/charge d'un groupe motopropulseur à deux turbocompresseurs étagés ; et
- la figure 3 illustre un procédé de diagnostic de défaillance d'un groupe motopropulseur.

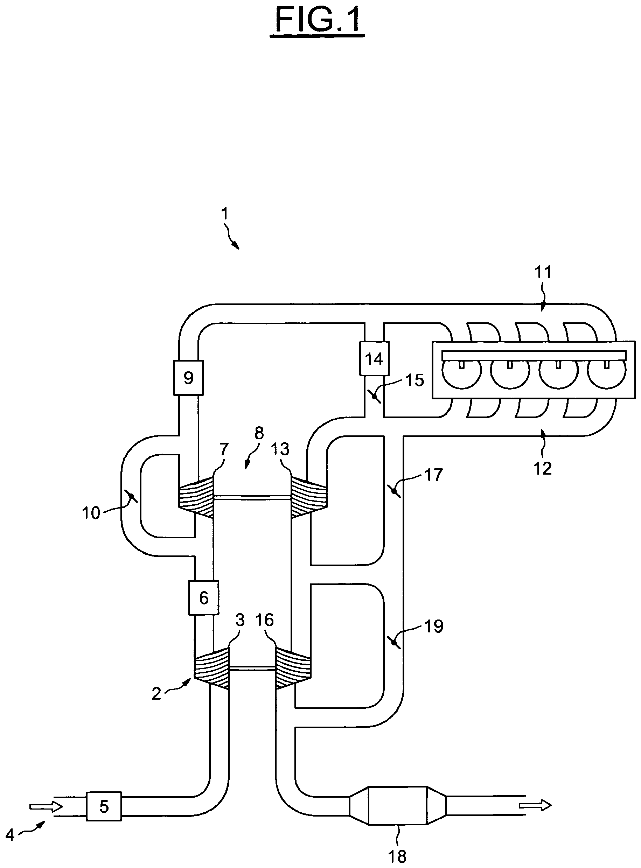

Sur la figure 1, on peut voir un groupe motopropulseur 1 comprenant un turbocompresseur à basse pression 2 dont le compresseur 3 est relié en entrée à une admission d'air frais 4 et à un capteur 5 apte à déterminer la température de l'air admis ainsi que le débit d'air admis. Le compresseur à basse pression 3 est relié en sortie à un échangeur à basse pression 6 lui-même relié au compresseur 7 d'un turbocompresseur 8 à haute pression. La sortie du compresseur à haute pression 7 est reliée d'une part à un échangeur à haute pression 9 et d'autre part à une vanne de dérivation 10, dite dérivation du compresseur à haute pression, par l'intermédiaire d'une conduite piquée entre l'échangeur à haute pression 9 et la sortie du compresseur à haute pression 7. La sortie de la dérivation 10 du compresseur à haute pression est piquée entre l'échangeur à basse pression 6 et l'entrée du compresseur du turbocompresseur à haute pression 7.

La sortie de l'échangeur à haute pression 9 est reliée au collecteur d'admission 11 du moteur à combustion interne. Le collecteur d'échappement 12 du moteur à combustion interne est relié à l'entrée de la turbine 13 du turbocompresseur à haute pression 8. Un circuit de recirculation des gaz d'échappement (Acronyme anglais « EGR » pour « exhaust gaz recirculation ») comprend un refroidisseur 14 connecté en série avec une vanne d'EGR 15. Le circuit d'EGR est piqué entre le collecteur d'admission 11 et le collecteur d'échappement 12 de sorte que la vanne d'EGR 15 se situe du coté du collecteur d'échappement 12 et que le refroidisseur 14 se situe du coté du collecteur d'admission 11.

La sortie de la turbine à haute pression 13 est reliée à l'entrée de la turbine à basse pression 16. Une conduite de dérivation à haute pression 17 est connectée entre la sortie de la turbine à haute pression 13 et l'entée de la turbine à haute pression 13, plus particulièrement, entre le collecteur d'admission 12 et le circuit d'EGR.

La sortie de la turbine à basse pression 16 est connectée à une conduite d'échappement par l'intermédiaire d'un filtre à particules 18. Une soupape 19 de décharge à basse pression (« waste gate » en langue anglaise) est piquée d'une part entre la sortie de la turbine à basse pression 16 et l'entrée du filtre à particules 18 et d'autre part entre la sortie de la turbine à haute pression 13 et l'entrée de la turbine à basse pression 16.

Le procédé de diagnostic permet de diagnostiquer l'intégrité du circuit d'admission de suralimentation en ayant recours à un modèle de turbomachine, indépendamment des performances et de l'activation de la régulation de suralimentation, quelle que soit la configuration de recirculation des gaz d'échappement, en conditions stabilisées ou transitoires, et sans rajouter de capteur supplémentaire. Le procédé de diagnostic permet également de limiter les besoins en calibration au minimum.

Pour cela, on définit un critère qui est le ratio entre l'estimation de la puissance de la turbine par deux moyens différents. Une première estimation est réalisée en fonction des données relatives au groupe motopropulseur qui sont situées du coté de la turbine. Une deuxième estimation est réalisée en fonction des données relatives au groupe motopropulseur qui sont situées du coté du compresseur. Ce critère permet d'estimer de façon très satisfaisante un dysfonctionnement du circuit d'admission de suralimentation.

En fonction des éléments décrits ci-dessus en référence à la figure 1, le turbocompresseur à haute pression 8 comprend une turbine 13 alimentée par les gaz d'échappement et un compresseur 7 qui comprime les gaz d'admission, ces deux éléments étant connectés par un arbre. La vitesse de rotation de l'arbre $\omega_{tc}$ (en rad/s) ou $N_{tc}$ (en tr/min) est déterminée par le bilan de puissance entre la turbine et le compresseur exprimé au sein de l'équation suivante :

$$\frac{d}{dt}\left(\frac{1}{2}J\omega_{TC}{}^2\right) = POW_t - POW_c \qquad (Eq.\ 1)$$

Avec J : l'inertie de la turbine
POWt = la puissance de la turbine
POWc = la puissance du compresseur

La puissance de la turbine à haute pression est exprimée par l'équation suivante :

$$POW_t = W_t T_{ut} \eta_t c_{p,exh}\left(1 - PR_t^{\frac{1-\gamma}{\gamma}}\right) \qquad (Eq.\ 2)$$

Avec $W_t$ : le débit massique de la turbine
$T_{ut}$ : température en amont de la turbine
$\eta_t$ : efficacité de la turbine
$C_{p,exh}$ : la capacité thermique massique à l'échappement
$PR_t$ : taux de compression de la turbine
$\gamma$ : rapport des capacités thermiques massiques

La puissance du compresseur à haute pression est exprimée par l'équation suivante :

$$POW_c = W_c T_{uc}\frac{1}{\eta_c}c_{p,adm}\left(PR_c^{\frac{\gamma-1}{\gamma}} - 1\right) \qquad (Eq.\ 3)$$

Avec $W_c$ : le débit massique du compresseur
$T_{uc}$ : la température en amont du compresseur
$\eta_c$ : efficacité du compresseur
$C_{p,adm}$ : la capacité thermique massique à l'admission
$PR_c$ : taux de compression du compresseur

Le compresseur peut être modélisé en fonction de relations statiques décrivant son fonctionnement. Ces relations statiques permettent de relier le taux de compression $PR_c$ et l'efficacité du compresseur $\eta_c$ à la vitesse du compresseur $N_{tc}$ et au débit le traversant $W_c$. Ces dépendances sont représentées sous forme de cartographies bidimensionnelles. Ces cartographies statiques s'expriment en fonction de la vitesse de compresseur corrigée $N_{c,cor}$ et du débit du compresseur corrigé $W_{c,cor}$ par rapport aux conditions standards définies par une pression de référence $P_{ref,c}$ et une température de référence $T_{ref,c}$, données par le fournisseur afin de tenir compte des différentes conditions en amont du compresseur.

La vitesse de compresseur corrigée $N_{c,cor}$ et le débit du compresseur corrigé $W_{c,cor}$ sont donnés par les équations suivantes :

$$N_{c,cor} = N_{tc}\sqrt{\frac{T_{ref,c}}{T_{uc}}} \qquad\qquad (Eq. \ 4)$$

$$W_{c,cor} = W_c\sqrt{\frac{T_{uc}}{T_{ref,c}}}\frac{P_{ref,c}}{P_{uc}} \qquad\qquad (Eq. \ 5)$$

Avec $P_{uc}$: la pression en amont du compresseur à haute pression

Le taux de compression et l'efficacité du compresseur sont alors calculés par les relations statiques suivantes :

$$PR_c = f_{c,\Pi}\left( N_{tc}\sqrt{\frac{T_{ref,c}}{T_{uc}}}, W_c\sqrt{\frac{T_{uc}}{T_{ref,c}}}\frac{P_{ref,c}}{P_{uc}} \right) \qquad\qquad (Eq. \ 6)$$

$$\eta_c = f_{c,\eta}\left( N_{tc}\sqrt{\frac{T_{ref,c}}{T_{uc}}}, W_c\sqrt{\frac{T_{uc}}{T_{ref,c}}}\frac{P_{ref,c}}{P_{uc}} \right) \qquad\qquad (Eq. \ 7)$$

Les relations $f_{c,\Pi}$, et $f_{c,\eta}$ sont des cartographies à deux entrées, pour la plage de vitesse de rotation et de débit de fonctionnement du compresseur, dans les conditions de référence choisies par le fabricant pour établir ces caractérisations au banc d'essais.

Alternativement, le taux de compression $PR_c$ peut être déterminé en modélisant le turbocompresseur à basse pression. Le turbocompresseur est corrélé à trois paramètres, le débit d'air du compresseur déterminé par un capteur tel qu'un débitmètre d'air, la pression en aval de la turbine à basse pression déterminée également par un capteur, et la température en amont de la turbine à basse pression déterminée par une cartographie vitesse de rotation / charge.

Le débit d'air de la turbine à basse pression est considéré comme étant égal au débit d'air frais mesuré par le débitmètre d'air. On utilise ensuite les cartographies du compresseur et de la turbine pour estimer les grandeurs manquantes, c'est-à dire le rapport de pressions et les efficacités grâce aux équations suivantes.

$$P_c = W_c C_p \frac{1}{\eta_c} T_{uc}\left( PR_c^{\frac{\gamma-1}{\gamma}} - 1 \right) \qquad\qquad (Eq. \ 8)$$

$$P_t = W_t C_p \eta_t T_{ut}\left( 1 - \left(\frac{1}{PR_t}\right)^{\frac{\gamma-1}{\gamma}} \right) \qquad\qquad (Eq. \ 9)$$

$$J.N\frac{dN}{dt} = P_t - P_c \qquad\qquad (Eq. \ 10)$$

avec:

$P_c$ : puissance du compresseur à basse pression,
$P_t$ : puissance de la turbine à basse pression,
$W_c$ : débit du compresseur à basse pression,
$W_t$ : débit de la turbine à basse pression,
$\eta_c$ : rendement du compresseur à basse pression,
$\eta_t$ : rendement de la turbine à basse pression,
$T_{uc}$ : température en amont du compresseur à basse pression,
$T_{ut}$ : température en amont de la turbine à basse pression,
$PR_c$ : rapport de compression basse pression,
$PR_t$ : rapport de détente de la turbine à basse pression,
$C_p$ et $\gamma$ : constantes thermodynamiques,
$N$ : vitesse de rotation du turbocompresseur à basse pression,
$J$ : inertie du turbocompresseur à basse pression.

Comme pour le compresseur, l'efficacité et le débit de la turbine sont exprimés en fonction du rapport de détente et de la vitesse du turbocompresseur corrigé :

$$N_{t,cor} = N_{tc}\sqrt{\frac{T_{ref,t}}{T_{ut}}} \qquad (Eq.\ 11)$$

$$W_{t,cor} = W_t\sqrt{\frac{T_{ut}}{T_{ref,t}}}\frac{P_{ref,t}}{P_{ut}} \qquad (Eq.\ 12)$$

Avec

Tref,t = température de référence
Pref,t = pression de référence
Nt,cor = vitesse de turbine corrigée
Wt,cor = débit de la turbine corrigé

Une première cartographie de débit $f_{t,W}$ de la turbine relie le débit des gaz traversant la turbine 27 à la vitesse de rotation de la turbine, au taux de détente $PR_t$ de la turbine et à la position $u_{VGT}$ de l'actionneur. Une seconde cartographie de rendement $f_{t,\eta}$ de la turbine relie également le rendement de la turbine $\eta_t$ à la vitesse de rotation de la turbine, au taux de détente $PR_t$ de la turbine et à la position $u_{VGT}$ de l'actionneur.
Ces cartographies à trois entrées sont généralement établies dans des conditions de référence choisies par le fabricant pour établir toutes ces caractérisations au banc d'essais.
En fonction de ces cartographies, la valeur corrigée du débit de la turbine $W_{t,cor}$ et l'efficacité de la turbine $\eta_t$ sont donnés par les relations statiques suivantes :

$$W_{t,cor} = f_{t,W}\left(N_{tc}\sqrt{\frac{T_{ref,t}}{T_{ut}}},\ PR_t\right) \qquad (Eq.\ 13)$$

$$\eta_t = f_{t,\eta}\left(N_{tc}\sqrt{\frac{T_{ref,t}}{T_{ut}}},\ PR_t\right) \qquad (Eq.\ 14)$$

Les équations 13 et 14 permettent alors de déterminer l'efficacité $\eta_t$.

La présence de la conduite de dérivation à haute pression n'a pas d'effet sur les caractéristiques de la turbine, mais vient en moduler le débit. En effet, lorsque la conduite de dérivation à haute pression est ouverte, l'égalité entre le débit du compresseur et le débit de la turbine n'est plus assurée. Il faut donc introduire une mesure supplémentaire pour avoir une estimation du débit turbine. Cette mesure est la pression en amont de la turbine à haute pression $P_{avt}$.

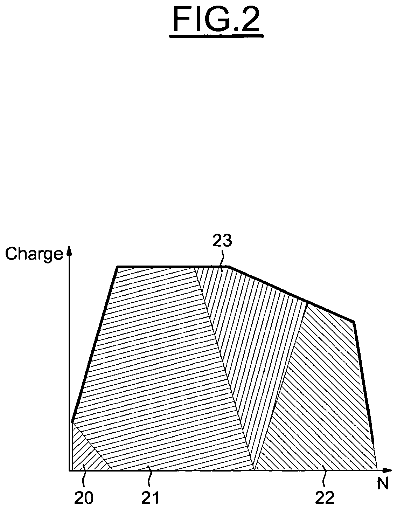

Grace aux équations précédentes, les valeurs $POW_t$ et $POW_c$ peuvent être déterminées. Toutefois, le groupe motopropulseur passe par différentes phases de fonctionnement qui impliquent des conditions de détermination différentes des valeurs $POW_t$ et $POW_c$. La figure 2 illustre les principales zones de fonctionnement de la double suralimentation dans le plan vitesse de rotation-charge du moteur.

A très faible charge et faible vitesse de rotation, dans la zone 20, la dérivation de la turbine à haute pression est fermée, le turbocompresseur à haute pression n'est pas contrôlé. La dérivation du compresseur à haute pression est fermée. La soupape de décharge à basse pression est fermée.

De moyenne charge à forte charge et à faible vitesse de rotation, dans la zone 21, la dérivation du compresseur à haute pression et la soupape de décharge à basse pression sont fermées. Le turbocompresseur à haute pression est contrôlé comme un turbocompresseur simple étage.

A haute vitesse de rotation, dans la zone 22, la dérivation de la turbine à haute pression et la dérivation du compresseur à haute pression sont ouvertes.

Dans la zone intermédiaire 23, le turbocompresseur à haute pression est utilisé seulement en conditions transitoires.

On va donc déterminer le critère pour chacune des trois situations de fonctionnement ci-dessus.

Pour déterminer la puissance du turbocompresseur en fonction des données disponibles du coté turbine, il nous faut distinguer trois possibilités. Une première possibilité correspond au cas du fonctionnement avec la dérivation de la turbine à haute pression fermée (zone 20 de la figure 2), un deuxième cas lorsque la dérivation de la turbine est ouverte et lorsque la mesure de la pression en amont de la turbine est possible (zone 21 de la figure 2), et un troisième cas lorsque la dérivation de la turbine est ouverte et lorsque l'on ne dispose que de la position de la dérivation de la turbine à haute pression (zone 22 de la figure 2). Pour les trois configurations nous avons un calcul spécifique de la puissance de la turbine.

Pour le premier cas, on mesure le débit de la turbine, on estime le taux de détente $PR_{t,est}$, puis on estime la puissance de la turbine $POW_{t,closed}$ grâce aux équations ci-dessous.

$$PR_{t,est} = f(N_{tc,est}, W_t) \qquad (Eq.\ 15)$$

$$POW_{t,CLOSED} = W_t T_{ut} \eta_{t,est}(W_t, N_{tc,est}) C_{p,exh}\left(1 - PR_{t,est}^{\frac{1-\gamma}{\gamma}}\right) (Eq.\ 16)$$

Pour le deuxième cas, on mesure la pression en amont de la turbine à haute pression $P_{ut}$, puis on estime le taux de détente $PR_{t,est}$ par application de l'équation suivante :

$$PR_{t,est} = P_{ut}/P_{dt,est} \qquad (Eq.\ 17)$$

On estime ensuite le débit de la turbine $W_{t,est}$ en fonction de la vitesse de rotation estimée du turbocompresseur $N_{tc,est}$ et du rapport de détente estimé $RP_{t,est}$ par application de l'équation suivante :

$$W_{t,est} = f(N_{tc,est}, PR_{t,est}) \qquad (Eq.\ 18)$$

Enfin, on estime la puissance de la turbine $POW_{t,OPENED,Put}$ en fonction du rendement estimé de la turbine $\eta_{t,est}$ par application de l'équation suivante :

$$POW_{t,OPENED,Put} = W_{t,est} T_{ut} \eta_{t,est}(W_{t,est}, N_{tc,est}) C_{p,exh}\left(1 - PR_{t,est}^{\frac{1-\gamma}{\gamma}}\right) \qquad (Eq.\ 19)$$

Pour le troisième cas, on mesure la position de la dérivation $X_{thp}$ ce qui permet de déduire la section de la

dérivation $S_{thp}$.

$$S_{thp} = f(X_{thp}) \qquad (Eq.\ 20)$$

Grâce à une relation de récurrence, on détermine le débit $W_{thp,est}$ traversant la dérivation de la turbine à haute pression 17 en appliquant la formule de Barré st Venant. Ensuite, on estime le débit de la turbine à haute pression $W_{t,est}$ puis la pression en amont de la turbine à haute pression $P_{ut,est}$ en réalisant le bilan massique dans le collecteur d'échappement.

$$W_{thp,est} = S_{thp} \cdot \frac{P_{ut,n-1}}{\sqrt{T_{ut}}} \cdot \psi\left(PR_{t,est,n-1}\right) \qquad (Eq.\ 21)$$

$$\text{Avec } \psi = \sqrt{\frac{2 \cdot \gamma}{R \cdot (\gamma - 1)} \cdot \sqrt{PR_t^{\frac{-2}{\gamma}} - \gamma \cdot PR_t^{\frac{-(\gamma-1)}{\gamma}}}} \qquad (Eq.\ 22)$$

$$W_{t,est} = f\left(N_{tc,est}, PR_{t,est,n-1}\right) \qquad (Eq.\ 23)$$

$$P_{ut,est} = \frac{R \cdot T_{ut}}{V_{ut}} \sum \left(W_c - W_{t,est} - W_{thp}\right) \qquad (Eq.\ 24)$$

$$PR_{t,est} = {P_{ut,est}} \Big/ {P_{dt,est}} \qquad (Eq.\ 25)$$

Enfin, on estime la puissance de la turbine $POW_{t,OPENED,Xthp}$ par application de l'équation suivante :

$$POW_{t,OPENED,Xthp} = W_{t,est} \cdot T_{ut} \cdot \eta_{t,est} \cdot \left(W_{t,est}, N_{tc,est}\right) \cdot C_{p,exh} \cdot \left(1 - PR_{t,est}^{\frac{1-\gamma}{\gamma}}\right) \quad (Eq.\ 26)$$

Comme on peut le voir, l'expression permettant de déterminer la puissance de la turbine est la même dans les trois zones de fonctionnement, seules diffèrent les étapes permettant d'obtenir les valeurs nécessaires au calcul de la puissance.

Une fois la puissance du turbocompresseur déterminée en fonction des informations disponibles du coté de la turbine, on détermine la puissance du turbocompresseur en fonction des informations disponibles du coté du compresseur.

Pour cela, on mesure la pression de suralimentation $P_{sg,mes}$, puis on estime le rapport de compression $PR_{c,est}$ par application de l'équation suivante.

$$PR_{c,est} = \frac{P_{sg,mes} + f_{RAS}(W_c)}{P_{uc} - f_{faa}(W_c)} \qquad (Eq.\ 27)$$

Avec

$f_{RAS}(W_c)$= les pertes de charge dans le refroidisseur d'air 9 sous la forme d'une fonction $f_{RAS}$ du débit $W_c$
$f_{faa}(W_c)$= les pertes de charges dans le filtre à air situé au niveau de l'admission d'air frais sous la forme d'une fonction $f_{faa}$ du débit massique d'air $W_c$

On estime ensuite la vitesse de rotation du turbocompresseur $N_{tc,est}$ et la puissance estimée du compresseur $POW_{c,CPR}$ par application des équations suivantes :

$$N_{tc,est} = f_{Nt}(PR_{c,est}, N_e)\sqrt{\frac{T_{uc}}{T_{ref,c}}} \qquad (Eq. 28)$$

$$POW_{c,est} = W_c T_{uc} \frac{1}{\eta_c(W_c, N_{tc,est})} c_{p,adm}\left(PR_c^{\frac{\gamma-1}{\gamma}} - 1\right) \qquad (Eq. 29)$$

On estime enfin la puissance de la turbine $POW_{t,CPR}$ par application de l'équation suivante :

$$POW_{t,CPR} = POW_{c,est} + (\frac{\pi}{30})^2 J N_{tc,est} \frac{dN_{tc,est}}{dt} \qquad (Eq. 30)$$

Avec $P_{uc}$ et $T_{uc}$ fournies par les estimateurs dynamiques décrits dans la demande de brevet français FR2932224.

La pression $P_{uc}$ à l'entrée du compresseur et la température $T_{uc}$ à l'entrée du compresseur peuvent être déterminées par un estimateur dynamique du turbocompresseur à basse pression.

Une fois que la puissance de la turbine déterminée par l'intermédiaire des informations disponibles du coté de la turbine et du coté du compresseur est disponible, il est possible de déterminer le critère ε.

Les contraintes relatives à la zone de fonctionnement du groupe motopropulseur, mises en avant lors de la détermination de la puissance de la turbine en fonction des informations disponibles du coté de la turbine, s'appliquent également à la détermination du critère.

Dans le premier cas, lorsque la dérivation de la turbine est fermée, on a :

$$\varepsilon_{t,CLOSED} = \frac{POW_{t,CLOSED}}{POW_{t,CPR}}$$

$$= (1 + \frac{W_{carb}}{W_c})\frac{T_{ut}}{T_{uc}}\frac{\left(1 - f(N_{tc,est}, W_t)^{\frac{1-\gamma}{\gamma}}\right)}{\left(PR_c^{\frac{\gamma-1}{\gamma}} - 1\right)}\eta_c(W_c, N_{tc,est})\eta_t(W_t, N_{t,est}) \qquad (Eq. 32)$$

Dans le deuxième cas et le troisième cas, lorsque la dérivation de la turbine est ouverte, on a les expressions suivantes :

$$\varepsilon_{t,OPENED,Put} = \frac{POW_{t,OPENED,Put}}{POW_{t,CPR}}$$

$$= \frac{W_{t,est}}{W_c}\frac{T_{ut}}{T_{uc}}\frac{\left(1 - P_{ut}/P_{dt,est}^{\frac{1-\gamma}{\gamma}}\right)}{\left(PR_c^{\frac{\gamma-1}{\gamma}} - 1\right)}\eta_c(W_c, N_{tc,est})\eta_t(W_t, N_{t,est}) \qquad (Eq. 33)$$

$$\varepsilon_{t,OPENED,Xthp} = \frac{POW_{t,OPENED,Xthp}}{POW_{t,CPR}}$$

$$= \frac{W_{t,est}}{W_c} \frac{T_{ut}}{T_{uc}} \frac{\left(1 - P_{ut,est}/P_{dt,est}^{\frac{1-\gamma}{\gamma}}\right)}{\left(PR_c^{\frac{\gamma-1}{\gamma}} - 1\right)} \eta_c(W_c, N_{tc,est})\eta_t(W_t, N_{t,est}) \qquad (Eq.\ 34)$$

Le but de l'introduction de la fonction f est de mettre le critère de diagnostic sous forme standard et de montrer les dépendances vis-à-vis des variables qui peuvent présenter une dispersion. Avec ce critère, on peut déterminer un déséquilibre entre les puissances vues par le compresseur et par la turbine. En ce sens, en cas de défaut de l'admission d'air ou de perte d'efficacité de la turbomachine, le critère va être au dessus de 1.

En l'absence de défaillance du turbocompresseur, c'est-à-dire quand le rendement de la turbine $\eta_t$ et du compresseur $\eta_c$ sont ceux que les cartographies prédisent pour un turbocompresseur intact conforme à la production, et en l'absence d'erreurs de mesures de paramètres (pression, température, etc.) de toute nature, ce rapport $\varepsilon$ est théoriquement égal à 1. En cas de défaut de la suralimentation (par exemple une perte de rendement de la turbine), le rapport de puissance $\varepsilon$ devient supérieur à 1.

Le procédé de diagnostic au cours d'une première étape 20 détermine la position de la dérivation de la turbine à haute pression. Si la dérivation est en position fermée, le procédé se poursuit à l'étape 21, sinon on détermine la pression en amont de la turbine à haute pression. Si la pression en amont de la turbine à haute pression peut être déterminée, le procédé se poursuit à l'étape 22 sinon le procédé se poursuit à l'étape 23.

A l'étape 21, on mesure le débit de la turbine $W_t$, puis on estime le taux de détente de la turbine $PR_{t,est}$ par application de l'équation 15, puis on estime la puissance de la turbine $POW_{t,CLOSED}$ par application de l'équation 16.

A l'étape 22, on mesure la pression en amont de la turbine $P_{ut}$. On estime ensuite le taux de détente $PR_{t,est}$ par application de l'équation 17. On estime ensuite le débit de la turbine $W_{t,est}$ par application de l'équation 18 puis la puissance de la turbine $POW_{t,OPENED,Put}$ par application de l'équation 19.

A l'étape 23, on mesure la position de la dérivation $X_{thp}$, puis on détermine la section de la dérivation $S_{thp}$ par application de l'équation 20. On mesure la température en amont de la turbine $T_{ut}$, puis on estime le débit à travers la dérivation de la turbine à haute pression $W_{thp,est}$ par application de l'équation 20 et de l'équation 21. On estime le débit de la turbine $W_{t,est}$ par application de l'équation 22 puis le taux de détente $PR_{t,est}$ grâce à la mesure du débit du compresseur $W_c$ et par application de l'équation 24 et 25. Le taux de détente est alors réintroduit dans les équations 21 à 23 afin d'obtenir une valeur plus précise par récurrence sur les équations 21 à 25. Une fois que l'on a obtenu une valeur stable du taux de détente $PR_{t,est}$, on estime la puissance de la turbine $POW_{t,OPENED,Xthp}$ par application de l'équation 26.

Apres l'étape 21, le procédé se poursuit par une étape 24 au cours de laquelle on détermine la puissance de la turbine en fonction des données provenant du compresseur. Pour cela, on mesure la pression de suralimentation $P_{sg}$, ainsi que le débit du compresseur Wc. On estime alors le rapport de compression $PR_{c,est}$ par application de l'équation 27. On estime ensuite la vitesse de rotation du turbocompresseur $N_{tc,est}$ par application de l'équation 28 et grâce à la mesure de la vitesse de rotation du moteur $N_e$. On estime ensuite la puissance du compresseur $POW_{c,est}$ par application de l'équation 29. Enfin, on estime la puissance de la turbine par application de l'équation 30.

Apres l'étape 22, le procédé se poursuit par une étape 25, identique à l'étape 24, au cours de laquelle on détermine la puissance de la turbine en fonction des données provenant du compresseur. Pour cela, on mesure la pression de suralimentation $P_{sg}$, ainsi que le débit du compresseur Wc. On estime alors le rapport de compression $PR_{c,est}$ par application de l'équation 27. On estime ensuite la vitesse de rotation du turbocompresseur $N_{tc,est}$ par application de l'équation 28 et grâce à la mesure de la vitesse de rotation du moteur $N_e$. On estime ensuite la puissance du compresseur POWc,est par application de l'équation 29. Enfin, on estime la puissance de la turbine par application de l'équation 30.

Apres l'étape 23, le procédé se poursuit par une étape 26, identique à l'étape 24, au cours de laquelle on détermine la puissance de la turbine en fonction des données provenant du compresseur. Pour cela, on mesure la pression de suralimentation $P_{sg}$, ainsi que le débit du compresseur Wc. On estime alors le rapport de compression $PR_{c,est}$ par application de l'équation 27. On estime ensuite la vitesse de rotation du turbocompresseur $N_{tc,est}$ par application de l'équation 28 et grâce à la mesure de la vitesse de rotation du moteur $N_e$. On estime ensuite la puissance du compresseur $POW_{c,est}$ par application de l'équation 29. Enfin, on estime la puissance de la turbine par application de l'équation 30.

A l'issue de l'étape 24, le procédé se poursuit à l'étape 27 au cours de laquelle on détermine la valeur du critère $\varepsilon$ par application de l'équation 32.

A l'issue de l'étape 25, le procédé se poursuit à l'étape 28 au cours de laquelle on détermine la valeur du critère $\varepsilon$ par application de l'équation 33.

A l'issue de l'étape 26, le procédé se poursuit à l'étape 29 au cours de laquelle on détermine la valeur du critère $\varepsilon$ par application de l'équation 34.

Le procédé se termine à l'étape 30 au cours de laquelle on compare le critère $\varepsilon$ déterminé à l'une quelconque des étapes 27, 28 ou 29 a des valeurs prédéterminées. Selon le résultat des comparaisons, on diagnostique une défaillance qui est transmise à destination de l'ordinateur de bord, et/ou des calculateurs et moyens de commande pouvant utiliser cette données et/ou de l'interface homme machine afin d'en informer le conducteur par l'illumination d'un signal d'avertissement.

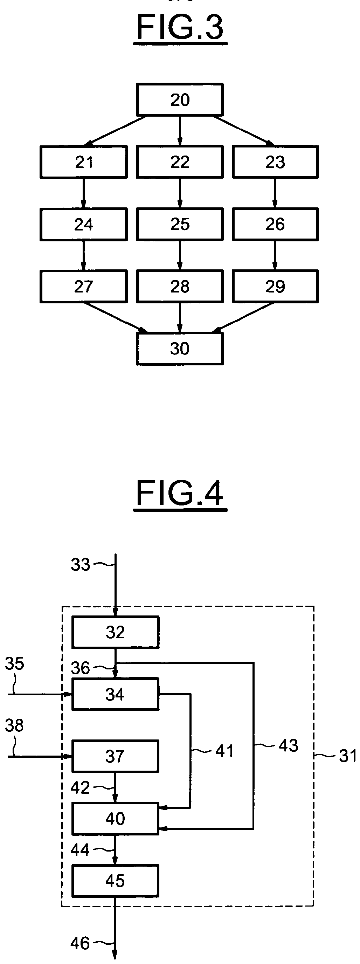

La figure 4 illustre un système de diagnostic 31 d'un groupe motopropulseur selon l'invention. Le système de diagnostic 31 comprend un moyen de détermination 32 du mode de fonctionnement du groupe motopropulseur. Par mode de fonctionnement, on entend les paramètres d'ouverture et de fermeture des différentes dérivations en accord avec la figure 2 et l'étape 20 de procédé. Le moyen de détermination 32 reçoit en entrée la position de la dérivation à haute pression $X_{thp}$ ainsi que la pression en amont de la turbine $P_{ut}$ si elle est disponible. Ces valeurs sont reçues de capteurs ou estimateurs par la connexion 33.

Le moyen de détermination 32 est relié en sortie à un premier moyen d'estimation 34 de la puissance de la turbine apte à déterminer la puissance de la turbine en fonction des variables déterminées du coté de la turbine, c'est-à-dire en fonction de la vitesse de rotation de la turbine $W_t$, de la température en amont de la turbine $T_{ut}$, de la pression en amont de la turbine $P_{ut}$, de la vitesse de rotation du compresseur $W_c$ et de la position de la dérivation à haute pression $X_{thp}$. Ces valeurs sont reçues de capteurs ou estimateurs par la connexion 35. Le premier moyen d'estimation 34 reçoit également, par la connexion 36, un signal logique provenant du moyen de détermination 32 indiquant quel mode de fonctionnement est actif. En fonction de ce signal, le premier moyen d'estimation 34 choisit le modèle correspondant parmi les modèles mémorisés (Eq. 16, 19 et 26).

Le système de diagnostic 31 comprend par ailleurs un deuxième moyen d'estimation 37 de la puissance de la turbine apte à déterminer la puissance de la turbine en fonction des variables déterminées du coté du compresseur, c'est-à-dire en fonction de la vitesse de rotation du compresseur $W_c$, de la pression de suralimentation $P_{sg}$, et de la vitesse de rotation du moteur à combustion interne $N_e$. Ces valeurs sont reçues de capteurs ou estimateurs par la connexion 38.

Le premier moyen d'estimation 34 de la puissance de la turbine et le deuxième moyen d'estimation 37 de la puissance de la turbine sont reliés en sortie à un moyen d'estimation 40 du critère par les connexions 41 et 42 respectivement. Le moyen d'estimation 40 du critère applique l'équation 32 ou l'équation 33 en fonction du signal logique émis par le moyen 32 et reçu la dérivation 43 de la connexion 36.

Le critère $\varepsilon$ est ensuite émis par la connexion 44 à destination d'un moyen de comparaison 45 apte à comparer le critère $\varepsilon$ à des valeurs mémorisées. Selon le résultat de la comparaison, une défaillance est déterminée et un signal logique correspondant est émis par la connexion 46.

Le système et le procédé de diagnostic permettent de déterminer l'occurrence d'une panne ou d'une fuite dans l'admission d'air d'un groupe motopropulseur muni de deux turbocompresseurs étagés de sorte que la vitesse de rotation du turbocompresseur à haute pression soit maintenue en dessous d'un seuil d'endommagement et de sorte que la stoechiométrie du moteur soit maintenue dans les normes réglementaires.

**Revendications**

1. Procédé de diagnostic d'un groupe motopropulseur muni d'au moins un turbocompresseur à basse pression (2) et d'au moins un turbocompresseur à haute pression (8), les turbocompresseurs étant étagés et alimentant un moteur à combustion interne, le groupe motopropulseur équipant un véhicule automobile, **caractérisé par le fait qu'**il comprend les étapes suivantes :

   on détermine le mode de fonctionnement du groupe motopropulseur,
   on détermine la puissance de la turbine à haute pression (13) en fonction d'un premier ensemble de données et en fonction du mode de fonctionnement,
   on détermine la puissance de la turbine à haute pression (13) en fonction d'un deuxième ensemble de données,
   on détermine un critère de défaillance comme le rapport entre la puissance de la turbine à haute pression (13) fonction du premier ensemble de données et la puissance de la turbine à haute pression (13) fonction du deuxième ensemble de données, et
   on compare le critère de défaillance à des valeurs mémorisées pour déterminer si une défaillance existe.

**2.** Procédé de diagnostic selon la revendication 1, dans lequel le premier ensemble de données est un ensemble de données déterminées du coté de la turbine à haute pression (13).

**3.** Procédé de diagnostic selon la revendication 1, dans lequel le premier ensemble de données comprend la vitesse de rotation de la turbine à haute pression et la température en amont de la turbine à haute pression.

**4.** Procédé de diagnostic selon la revendication 1, dans lequel le premier ensemble de données comprend la pression en amont de la turbine à haute pression et la température en amont de la turbine à haute pression.

**5.** Procédé de diagnostic selon la revendication 1, comprenant une dérivation à haute pression (17) connectée entre l'entrée et la sortie de la turbine à haute pression (13), dans lequel le premier ensemble de données comprend la position de la dérivation à haute pression (17), la température en amont de la turbine à haute pression et la vitesse de rotation du compresseur à haute pression.

**6.** Procédé de diagnostic selon l'une quelconque des revendications précédentes, dans lequel le deuxième ensemble de données est un ensemble de données déterminées du coté du compresseur à haute pression (7).

**7.** Procédé de diagnostic selon l'une quelconque des revendications 1 à 5, dans lequel le deuxième ensemble de données comprend la vitesse de rotation du compresseur à haute pression, la pression de suralimentation et la vitesse de rotation du moteur à combustion interne.

**8.** Procédé de diagnostic selon l'une quelconque des revendications précédentes, dans lequel on détermine le mode de fonctionnement en fonction de la position de la dérivation à haute pression et de la pression en amont de la turbine à haute pression.

**9.** Système de diagnostic d'un groupe motopropulseur muni d'au moins un turbocompresseur à basse pression (2) et d'au moins un turbocompresseur à haute pression (8), les turbocompresseurs étant étagés et alimentant un moteur à combustion interne, le groupe motopropulseur équipant un véhicule automobile, **caractérisé par le fait que** le système de diagnostic (31) comprend un moyen de détermination (32) du mode de fonctionnement du groupe motopropulseur relié en sortie à un premier moyen d'estimation (34) de la puissance de la turbine à haute pression, le système de diagnostic (31) comprenant par ailleurs un deuxième moyen d'estimation (37) de la puissance de la turbine à haute pression et un moyen d'estimation (40) d'un critère de défaillance connecté en entrée au premier moyen d'estimation (34) de la puissance de la turbine à haute pression et au deuxième moyen d'estimation (37) de la puissance de la turbine à haute pression et en sortie à un moyen de comparaison (45) apte à comparer le critère de défaillance à des valeurs mémorisées.

**10.** Système de diagnostic selon la revendication 9, dans lequel le premier moyen d'estimation (34) de la puissance de la turbine à haute pression comprend au moins un moyen de modélisation du turbocompresseur à haute pression, le premier moyen d'estimation (34) étant apte à utiliser le moyen de modélisation du turbocompresseur à haute pression correspondant au signal reçu du moyen de détermination (32) du mode de fonctionnement du groupe motopropulseur.

**Patentansprüche**

**1.** Diagnoseverfahren eines Antriebstrangs, der mit mindestens einem Niederdruck-Turbolader (2) und mindestens einem Hochdruck-Turbolader (8) versehen ist, wobei die Turbolader gestuft sind und eine Brennkraftmaschine versorgen, wobei ein Kraftfahrzeug mit dem Antriebsstrang ausgestattet ist, **dadurch gekennzeichnet, dass** es die nachfolgenden Schritte umfasst:

Bestimmen des Funktionsmodus des Antriebsstrangs,
Bestimmen der Leistung der Hochdruck-Turbine (13) in Abhängigkeit von einem ersten Datensatz und in Abhängigkeit von dem Funktionsmodus,
Bestimmen der Leistung der Hochdruck-Turbine (13) in Abhängigkeit von einem zweiten Datensatz,
Bestimmen eines Ausfallkriteriums, wie beispielsweise das Verhältnis zwischen der Leistung der Hochdruck-Turbine (13) in Abhängigkeit von dem ersten Datensatz und der Leistung der Hochdruck-Turbine (13) in Abhängigkeit von dem zweiten Datensatz, und
Vergleichen des Ausfallkriteriums mit gespeicherten Werten, um zu bestimmen, ob ein Ausfall vorliegt.

**2.** Diagnoseverfahren nach Anspruch 1, wobei es sich bei dem ersten Datensatz um einen Datensatz handelt, der seitens der Hochdruck-Turbine (13) bestimmt wird.

**3.** Diagnoseverfahren nach Anspruch 1, wobei der erste Datensatz die Drehzahl der Hochdruck-Turbine und die Temperatur stromaufwärts der Hochdruck-Turbine umfasst.

**4.** Diagnoseverfahren nach Anspruch 1, wobei der erste Datensatz den Druck stromaufwärts der Hochdruck-Turbine und die Temperatur stromaufwärts der Hochdruck-Turbine umfasst.

**5.** Diagnoseverfahren nach Anspruch 1, das einen Hochdruck-Bypass (17) umfasst, der mit dem Eingang und dem Ausgang der Hochdruck-Turbine (13) verbunden ist, wobei der erste Datensatz die Position des Hochdruck-Bypasses (17), die Temperatur stromaufwärts der Hochdruck-Turbine und die Drehzahl des Hochdruck-Laders umfasst.

**6.** Diagnoseverfahren nach irgendeinem der vorhergehenden Ansprüche, wobei es sich bei dem zweiten Datensatz um einen Datensatz handelt, der seitens des Hochdruck-Laders (7) bestimmt wird.

**7.** Diagnoseverfahren nach irgendeinem der Ansprüche 1 bis 5, wobei der zweite Datensatz die Drehzahl des Hochdruck-Laders, den Ladedruck und die Drehzahl der Brennkraftmaschine umfasst.

**8.** Diagnoseverfahren nach irgendeinem der vorhergehenden Ansprüche, wobei der Funktionsmodus in Abhängigkeit von der Position des Hochdruck-Bypasses und des Drucks stromaufwärts der Hochdruck-Turbine bestimmt wird.

**9.** Diagnosesystem eines Antriebsstrangs, der mit mindestens einem Niederdruck-Turbolader (2) und mit mindestens einem Hochdruck-Turbolader (8) versehen ist, wobei die Turbolader gestuft sind und eine Brennkraftmaschine versorgen, wobei ein Kraftfahrzeug mit dem Antriebsstrang ausgestattet ist, **dadurch gekennzeichnet, dass** das Diagnosesystem (31) ein Bestimmungsmittel (32) des Funktionsmodus des Antriebsstrangs umfasst, das am Ausgang an ein erstes Schätzungsmittel (34) der Leistung der Hochdruck-Turbine angeschlossen ist, wobei das Diagnosesystem (31) darüber hinaus ein zweites Schätzungsmittel (37) der Leistung der Hochdruck-Turbine und ein Schätzungsmittel (40) eines Ausfallkriteriums umfasst, das am Eingang mit dem ersten Schätzungsmittel (34) der Leistung der Hochdruck-Turbine und dem zweiten Schätzungsmittel (37) der Leistung der Hochdruck-Turbine und am Ausgang mit einem Vergleichsmittel (45) verbunden ist, das in der Lage ist, das Ausfallkriterium mit gespeicherten Werten zu vergleichen.

**10.** Diagnosesystem nach Anspruch 9, wobei das erste Schätzungsmittel (34) der Leistung der Hochdruck-Turbine mindestens ein Modellierungsmittel des Hochdruck-Turboladers umfasst, wobei das erste Schätzungsmittel (34) in der Lage ist, das Modellierungsmittel des Hochdruck-Turboladers entsprechend dem Signal zu verwenden, das von dem Bestimmungsmittel (32) des Funktionsmodus des Antriebsstrangs empfangen wird.

**Claims**

**1.** Diagnostic method for a power train provided with at least one low-pressure turbocharger (2) and at least one high-pressure turbocharger (8), the turbochargers being staged and supplying an internal combustion engine, the power train being installed in an engine vehicle, **characterized by** the fact that it comprises the following steps:

the mode of operation of the power train is determined,
the power of the high-pressure turbine (13) is determined as a function of a first set of data and as a function of the mode of operation,
the power of the high-pressure turbine (13) is determined as a function of a second set of data,
a failure criterion is determined as the ratio between the power of the high-pressure turbine (13) that is a function of the first set of data and the power of the high-pressure turbine (13) that is a function of the second set of data, and
the failure criterion is compared to stored values to determine whether a failure exists.

**2.** Diagnostic method according to Claim 1, wherein the first set of data is a set of data determined on the side of the high-pressure turbine (13).

**3.** Diagnostic method according to Claim 1, wherein the first set of data comprises the speed of rotation of the high-pressure turbine and the temperature upstream of the high-pressure turbine.

4. Diagnostic method according to Claim 1, wherein the first set of data comprises the pressure upstream of the high-pressure turbine and the temperature upstream of the high-pressure turbine.

5. Diagnostic method according to Claim 1, comprising a high-pressure bypass (17) connected between the inlet and the outlet of the high-pressure turbine (13), wherein the first set of data comprises the position of the high-pressure bypass (17), the temperature upstream of the high-pressure turbine and the speed of rotation of the high-pressure compressor.

6. Diagnostic method according to any one of the preceding claims, wherein the second set of data is a set of data determined on the side of the high-pressure compressor (7).

7. Diagnostic method according to any one of Claims 1 to 5, wherein the second set of data comprises the speed of rotation of the high-pressure compressor, the supercharging pressure and the speed of rotation of the internal combustion engine.

8. Diagnostic method according to any one of the preceding claims, wherein the mode of operation is determined as a function of the position of the high-pressure bypass and of the pressure upstream of the high-pressure turbine.

9. Diagnostic system for a power train provided with at least one low-pressure turbocharger (2) and at least one high-pressure turbocharger (8), the turbochargers being staged and supplying an internal combustion engine, the power train being installed in an engine vehicle, **characterized by** the fact that the diagnostic system (31) comprises a means (32) for determining the mode of operation of the power train linked at the output to a first means (34) of estimating the power of the high-pressure turbine, the diagnostic system (31) also comprising a second means (37) of estimating the power of the high-pressure turbine and a means (40) of estimating a failure criterion connected at the input to the first means (34) of estimating the power of the high-pressure turbine and to the second means (37) of estimating the power of the high-pressure turbine and at the output to a comparison means (45) suitable for comparing the failure criterion to stored values.

10. Diagnostic system according to Claim 9, wherein the first means (34) of estimating the power of the high-pressure turbine comprises at least one means for modeling the high-pressure turbocharger, the first estimation means (34) being able to use the means for modeling the high-pressure turbocharger corresponding to the signal received from the means (32) for determining the mode of operation of the power train.

# FIG.1

# FIG.2

## FIG.3

```
                    ┌──────────┐
                    │    20    │
                    └──────────┘
              ┌──────────┼──────────┐
              ▼          ▼          ▼
        ┌─────────┐┌─────────┐┌─────────┐
        │   21    ││   22    ││   23    │
        └─────────┘└─────────┘└─────────┘
              │          │          │
              ▼          ▼          ▼
        ┌─────────┐┌─────────┐┌─────────┐
        │   24    ││   25    ││   26    │
        └─────────┘└─────────┘└─────────┘
              │          │          │
              ▼          ▼          ▼
        ┌─────────┐┌─────────┐┌─────────┐
        │   27    ││   28    ││   29    │
        └─────────┘└─────────┘└─────────┘
              └──────────┼──────────┘
                         ▼
                   ┌──────────┐
                   │    30    │
                   └──────────┘
```

## FIG.4

**RÉFÉRENCES CITÉES DANS LA DESCRIPTION**

**Documents brevets cités dans la description**

- FR 2932224